# EUROPEAN PATENT APPLICATION

(11) **EP 4 737 102 A1**
(43) Date of publication of application: **06.05.2026**
(21) Application number: 25210981.4
(22) Date of filing: 24.10.2025
(51) Int. Cl.: B29C 65/34, B29C 65/36, B29C 65/78, B29C 65/00, B65B 9/12, B65B 9/20, B65B 51/30, B29C 65/74, B65B 51/22, B29L 31/00

(54) **SEALING DEVICE FOR A FORMING UNIT FOR FORMING SEALED PACKS CONTAINING A POURABLE PRODUCT**

(30) Priority: 30.10.2024 IT 202400024243
(71) Applicant: Tetra Laval Holdings & Finance S.A., 1009 Pully (CH)
(72) Inventor: GIANGOLINI, Matteo, 41123 Modena (IT); BABINI, Andrea, 41123 Modena (IT); GUIDETTI, Mattia, 41123 Modena (IT); MAGELLI, Roberto, 41123 Modena (IT); CASINI, Giulio, 41123 Modena (IT)
(74) Representative: Tetra Pak Patent Attorneys

(57) **Abstract**

There is described a sealing device (14) for sealing a tube of packaging material (3) containing a pourable product to obtain sealed packs (2a) filled with the pourable product, the sealing device (14) including a sealing member (14a) and a counter-sealing member (14b) configured to interact with the tube (3) for sealing a transversal section of the tube (3), thereby defining a transversal sealing band on the tube (3), the sealing device (14) comprising: a support frame (12) for supporting the sealing member (14a); a power transfer system (15) for powering the sealing member (14a) and comprising a conductive member (16) connected to the sealing member (14a) and configured to feed electrical energy to the sealing member (14a); a stop member (17) carried by the support frame (12) and arranged to cooperate with the conductive member (16) for at least limiting a movement of the conductive member (16).

## Description

### TECHNICAL FIELD

The present invention relates to a sealing device for a forming unit for forming sealed packs containing a pourable product, preferably a pourable food product, from a tube formed from a web of packaging material.

In particular, the present invention refers to a sealing device for a forming unit that is part of a packaging apparatus configured to produce sealed packages containing a pourable product.

### BACKGROUND ART

As is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material. The packaging material has a multilayer structure comprising a base layer, e.g. made of paper, covered on both sides with layers of heat-sealable material, e.g. polyethylene.

In the case of aseptic packages for long-storage products, such as UHT milk, the packaging material also comprises a layer of oxygen-barrier material, e.g. an aluminum foil, which is superimposed on a layer of heat-sealable material, and is in turn covered with another layer of heat-sealable material forming the inner face of the package eventually contacting the food product.

Packages of this sort are usually produced on fully automatic packaging apparatuses, which form and fill the packages starting from a multilayer web of packaging material.

In particular, in such packaging apparatuses a continuous tube is formed from the web of packaging material which is initially wound in a reel and fed through a plurality of unwinding rollers. The web of packaging material is typically sterilized in the packaging apparatuses, e.g. by applying a chemical sterilizing agent, such as hydrogen peroxide solution, which, once sterilization is completed, is removed from the surfaces of the packaging material, e.g. evaporated by heating. The web so sterilized is then maintained in a closed, sterile environment, and, being advanced by the aforementioned unwinding rollers, is folded to form the tube and then sealed longitudinally.

In order to perform the package forming operations, the tube is continuously fed along a first direction, usually a straight vertical direction, is filled with the sterilized food product from above and is formed, sealed and subsequently cut along equally spaced transversal cross-sections extending along a second direction, usually a direction orthogonal to the first direction.

So-called pillow packs are obtained thereby, which have a longitudinal sealing band, a top transversal sealing band and a bottom transversal sealing band.

A packaging apparatus of such type is known from WO-A-2022017745. Such packaging apparatus comprises a forming unit having a plurality of jaw units and a conveyor device for advancing the jaw units. Each jaw unit comprises:
- a pair of forming members configured to engage the tube from opposite sides thereof for forming the tube while advancing along respective operative sections of a conveying path; and
- a pair of sealing members configured to engage the tube from opposite sides thereof for transversally sealing the tube at the above-mentioned equally spaced transversal cross-sections while advancing along the respective operative sections of the conveying path.

In greater detail, each jaw unit includes two jaw members, each one defining a forming and sealing arrangement, each jaw member or forming and sealing arrangement including one forming member and one sealing member.

Hence, the plurality of jaw units includes two sets of jaw members, the jaw members of each set being linked together to form an endless chain.

In other words, each jaw member defines a link of the respective endless chain.

The conveyor device is configured to advance each endless chain. That is, the conveyor device is configured to advance each jaw member along a respective closed-loop path.

A typical pair of forming members comprises two internally shaped half-shells, arranged at opposite lateral sides of the tube, facing one another and configured to cyclically engage the tube from opposite lateral sides thereof, so as to surround successive portions of the tube to sequentially impart a predetermined shape to these portions (according to a manner known).

A typical pair of sealing members comprises a sealing element and a counter-sealing element, arranged at opposite lateral sides of the tube, facing one another and configured to cyclically engage the tube in a clamping manner from opposite lateral sides thereof, so as to repeatedly seal the tube at the aforementioned cross-sections (according to a manner known).

Each sealing element and the corresponding counter-sealing element define together a sealing device.

Typically, each jaw unit also comprises a cutting element, carried by one of the sealing element and counter-sealing element for repeatedly interacting with the tube to cut the tube along previously created transversal sealing bands.

In this way, the obtained pillow packs are separated from one another at the transversal sealing bands.

The so-obtained pillow packs are then directed to a folding unit of the packaging apparatus for the final folding thereof, thereby obtaining fully-folded finished packages containing pourable product.

According to one preferred solution, the sealing elements are inductive sealing elements, and are configured to heat-seal the tube whereby the heat is generated in the aluminum foil layer by means of electromagnetic induction, according to a manner known.

Accordingly, each sealing element must be supplied with electrical energy.

To this end, the forming unit further comprises a power transfer system configured to supply electrical energy to each sealing element.

The power transfer system includes a conductive member connected to the sealing element, configured to be fed with electrical energy from a power source, and configured to feed the electrical energy to the sealing element.

Although the forming units, in particular the sealing devices, of the type described above work satisfyingly well, the Applicant has observed that they are still open to further improvement. In particular, a need is felt in the sector to further improve the known sealing devices, forming units and packaging apparatuses so as to allow to a further increase the production speeds.

### DISCLOSURE OF INVENTION

It is therefore an object of the present invention to provide a sealing device which is designed to meet the above-mentioned need in a straightforward and low-cost manner.

This object is achieved by a sealing device as claimed in claim 1. Preferred embodiments of the present invention are laid down in the dependent claims.

### BRIEF DESCRIPTION OF THE DRAWINGS

A non-limiting embodiment of the present invention will be described by way of example with reference to the accompanying drawings, in which:
Figure 1 is a schematic perspective view, with parts removed for clarity, of a packaging apparatus including a forming unit comprising a sealing device according to the present invention;
Figure 2 is a larger-scale side view, with parts removed for clarity, of the forming unit comprising a dealing device according to the present invention;
Figure 3 is a larger-scale perspective view, with parts removed for clarity, of a sealing device according to the present invention;
Figure 4 is a further perspective view, with parts removed for clarity, of the sealing device of Figure 3;
Figure 5 is a bottom view, with parts removed for clarity, of the sealing device of Figure 3;
Figure 6 is a perspective view, with parts removed for clarity, of a sealing device according to an alternative embodiment of the present invention.

### BEST MODE FOR CARRYING OUT THE INVENTION

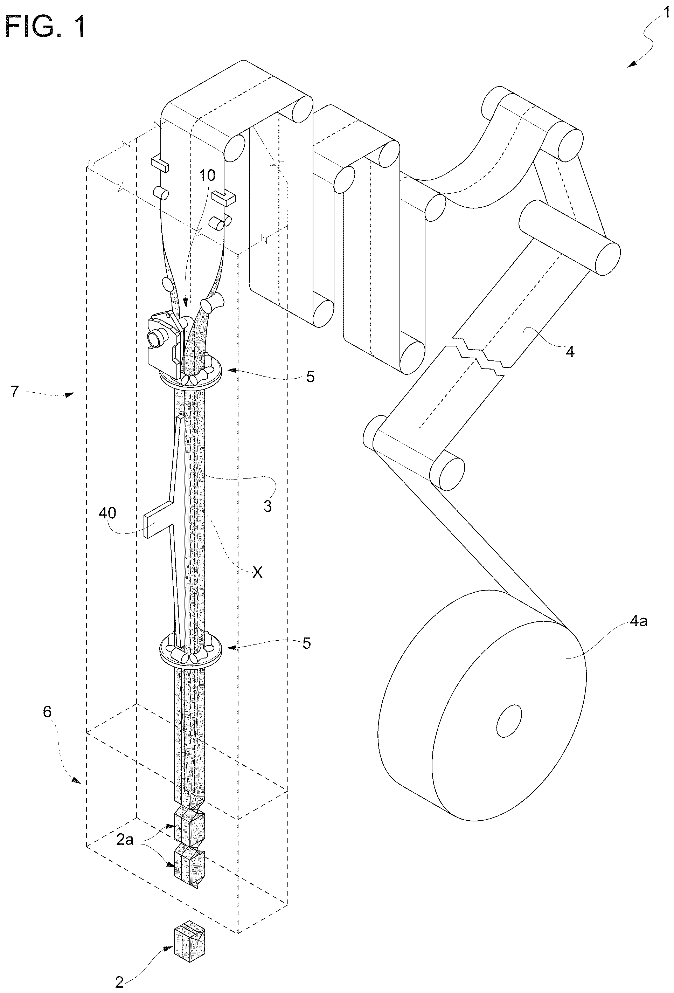

With reference to Figure 1, number 1 indicates as a whole a non-limiting example of a packaging apparatus for producing a plurality of packages 2 containing a pourable product, preferably a pourable food product such as pasteurized or UHT milk, water, fruit juice, wine, peas, beans, etc.

In detail, packaging apparatus 1 is configured to form, seal and fold packages 2 starting from a tube 3 of packaging material.

Preferably, the packaging material has a multilayer structure (not shown), and comprises a layer of fibrous material, e.g. paper, covered on both sides with respective layers of heat-sealable material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-sealable material, and is in turn covered with another layer of heat-sealable material, the latter forming the inner face of package 2 eventually contacting the pourable product.

Preferably, the packaging material is initially provided in the form of a web 4, in particular initially wound in a reel 4a.

As schematically shown in Figure 1, the packaging apparatus 1 comprises:
- web folding devices 5 for progressively folding web 4 into tube 3, in a manner known and not described in detail;
- a tube sealing element 40 for providing tube 3 with a longitudinal seal;
- a filling device 10 (only partially shown) for filling tube 3 with the pourable product;
- a forming unit 6 for forming tube 3 by imparting a predetermined external shape, corresponding to a precursor of the shape of package 2, to successive longitudinal portions of tube 3, and for sealing tube 3 at equally spaced cross-sections.

Packaging apparatus 1 further comprises an isolation chamber 7 enclosing an environment to be controlled in sterile and/or aseptic conditions.

Conveniently, at least web folding devices 5, filling device 10 and tube sealing element 40 are housed in isolation chamber 7.

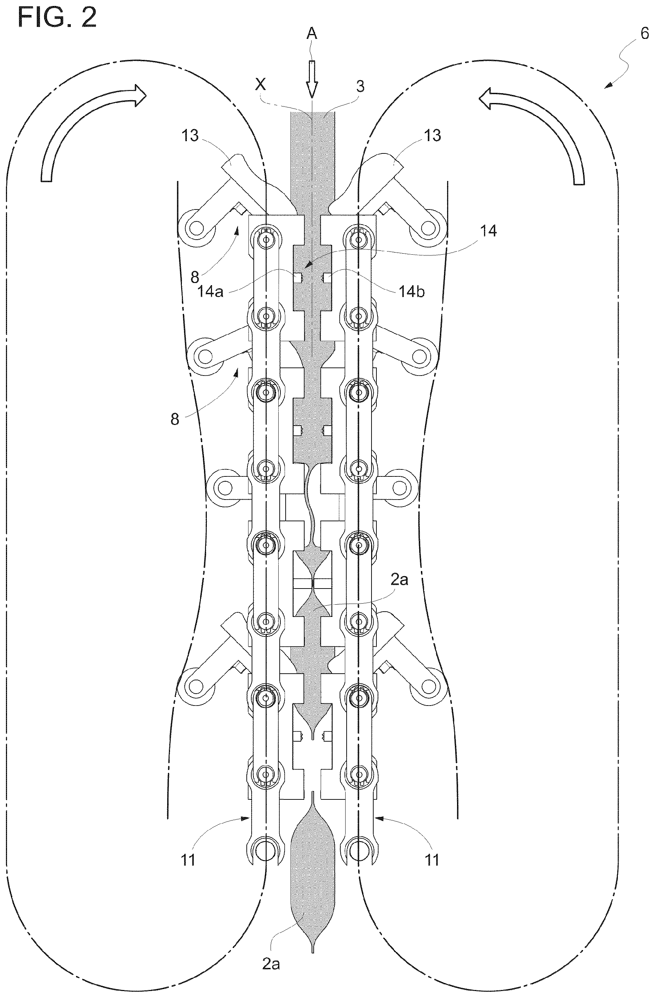

As visible in particular in Figure 2, forming unit 6 has a central axis X along which tube 3 is fed, in use.

Central axis X is parallel to a first direction A, which is preferably a straight vertical direction.

Hence, in use, tube 3 is fed along first direction A, downwards, and while being filled from above is formed and sealed by forming unit 6.

In this way, a plurality of pillow packs 2a are obtained.

Packaging apparatus 1 further comprises a folding unit (known per se and not shown) for folding the pillow packs 2a, thereby obtaining packages 2, according to a manner known and not described in detail.

Hence, packaging apparatus 1 is configured to form and seal a plurality of pillow packs 2a containing the pourable product starting from web 4 and tube 3 and then to fold the pillow packs 2a for obtaining the aforementioned formed, sealed and folded packages 2 containing the pourable product.

More precisely, forming unit 6 is, for example, of the type described in WO-A-2022017745 and comprises a plurality of forming devices 8 and a plurality of sealing devices 14.

The sealing devices 14 are configured to cyclically interact with tube 3 for sealing tube 3.

The forming devices 8 are configured to cyclically interact with tube 3 for forming tube 3.

In greater detail, each sealing device 14 defines together with a corresponding forming device 8 a jaw unit.

Forming unit 6, therefore, comprises a plurality of jaw units.

Forming unit 6 includes a conveyor device for advancing the jaw units.

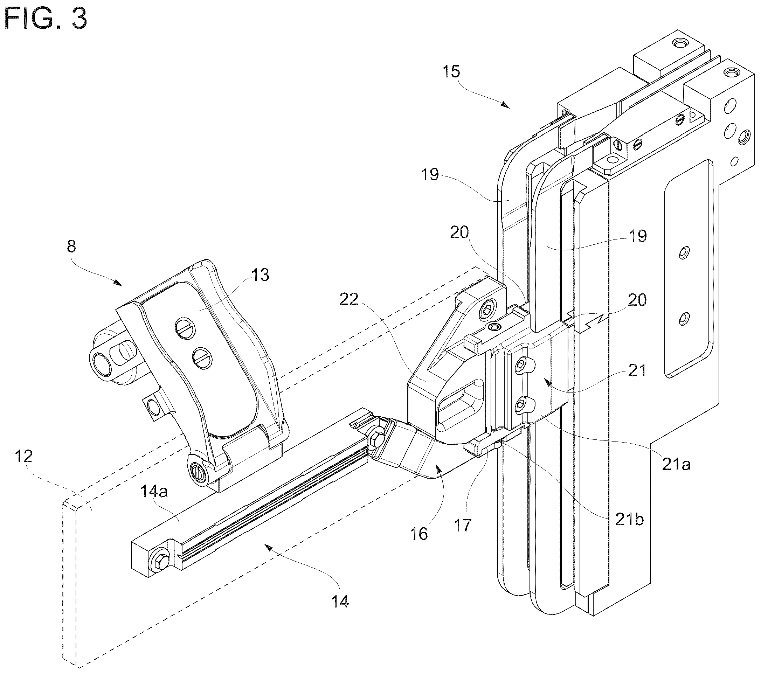

As shown in Figures 2 and 3, each sealing device 14 comprises a sealing member 14a and a counter-sealing member 14b configured to interact with tube 3 for sealing a transversal section of tube 3, thereby defining a transversal sealing band on tube 3.

In detail, sealing device 14 comprises a support frame 12 for supporting the sealing member 14a, and a support frame 12 for supporting the counter-sealing member 14b.

In greater detail, for each sealing device 14, the sealing member 14a and the counter-sealing member 14b are configured to cooperate with one another and with tube 3 from opposite sides of tube 3, so as to interact with tube 3 and provide the tube 3 with the transversal sealing band.

In detail, sealing member 14a and counter sealing member 14b of each sealing device 14 (i.e. of each jaw unit) are movable towards and away from one another and from tube 3 along a second direction transversal to first direction A, and in particular orthogonal to first direction A, for cyclically sealing tube 3 at successive portions.

Each forming device 8 includes a pair of forming members 13 configured to contact tube 3 for forming a longitudinal section of tube 3.

Each jaw unit comprises a couple of jaw elements interacting with each other. One jaw element supports a forming member 13 of one forming device 8 and one of the sealing member 14a and counter-sealing member 14b of the respective sealing device 14, whilst the other jaw element supports the other forming member 13 of the one forming device 8 and the other one of the sealing member 14a and counter-sealing member 14b of the respective sealing device 14

Each forming member 13 is mounted to a respective support frame. In particular each forming member 13 is mounted to the same support frame 12 that also supports the respective sealing member 14a or counter-sealing member 14b of the same jaw element.

According to the non-limiting embodiment shown, each forming member 13 includes an internally shaped half-shell (Figure 3) configured to cyclically interact in contact with tube 3 for imprinting its shape thereon.

In detail, forming members 13 of each forming device 8 (i.e. of each jaw unit) are movable towards and away from one another and from tube 3 along the second direction transversal to first direction A, and in particular orthogonal to first direction A, for cyclically surrounding and engaging tube 3 and forming tube 3 at the successive portions.

The plurality of jaw units includes two sets of forming members 13 and two sets of sealing members 14a and counter-sealing members 14b (i.e. one set of sealing members 14a and one set of counter-sealing members 14b), the forming members 13 and the sealing members 14a or counter-sealing members 14b of each set being linked together to form an endless chain 11.

In practice, one endless chain 11 includes forming members 13 of one set of forming members 13 and sealing members 14a, and the other endless chain 11 includes forming members 13 of the other set of forming members 13 and counter-sealing members 14b.

In other words, each forming member 13 and the respective sealing member 14a or counter-sealing member 14b define a link of the respective endless chain 11, as shown in Figure 2.

The conveyor device is configured to advance each endless chain 11 along a respective closed-loop path.

The conveyor device is also configured in such a way that, during operation, each sealing member 14a interacts with the respective counter-sealing member 14b of the same sealing device 14 for sealing tube 3.

Moreover, the conveyor device is configured is such a way that, during operation, each forming member 13 interacts with the respective other forming member 13 of the same forming device 8 for forming tube 3.

In light of the above, each sealing device 14 includes a sealing member 14a and a counter-sealing member 14b configured to engage the tube 3 from opposite sides thereof for transversally sealing the tube 3 at the above-mentioned equally spaced transversal cross-sections and while advancing along direction A.

Similarly, each forming device 8 includes a pair of forming members 13 configured to engage the tube 3 from opposite sides thereof and to form the tube 3 while advancing along direction A.

In the preferred, non-limiting embodiment shown, each forming member 13 is associated with a respective sealing member 14a or with a respective counter-sealing member 14b.

In particular, each support frame 12 carries one sealing member 14a or counter-sealing member 14b and one forming member 13, so that a plurality of forming and sealing devices is defined.

For each forming and sealing device, sealing member 14a or counter-sealing member 14b is arranged operatively downstream of forming member 13, with respect to the advancement direction of the forming and sealing device.

Alternatively, forming devices 8 and sealing devices 14 may be independent from one another.

In light of the above, forming members 13, sealing members 14a and counter-sealing members 14b are cyclically carried by the conveyor device along direction A to cyclically and repeatedly engage the successive portions of tube 3.

Tube 3 is drawn (downwards) along direction A in a known manner, due to the advancement of forming devices 8 and sealing devices 14, and due to the interaction of forming members 13 and of sealing members 14a and counter-sealing members 14b with tube 3.

Expediently, each jaw unit also comprises a cutting member (not shown), carried by one of the forming device 8 and sealing device 14 (preferably the sealing device 14, and in particular by the respective counter-sealing member 14b) for interacting with tube 3 to cut tube 3 along the previously created transversal sealing band, once the respective tube portion is formed.

In this way, the obtained pillow packs 2a are separated from one another at the respective transversal sealing bands.

For the sake of brevity, reference will be made in the following to a single sealing device 14, however, all the structural and functional features described hereinafter for such sealing device 14 are equally applicable to all sealing devices 14 of forming unit 6.

Sealing device 14, and more generally forming unit 6, includes a power transfer system 15 for powering sealing member 14a with electrical energy.

Power transfer system 15 comprises a conductive member 16 connected to the sealing member 14a, in particular electrically connected to the sealing member (14a), and configured to feed the electrical energy to the sealing member 14a.

In a preferred embodiment, sealing member 14a comprises an inductor configured to heat-seal tube 3 by means of electromagnetic induction. Hence, conductive member 16 is configured to supply electrical energy to the inductor.

According to the preferred embodiment shown, conductive member 16 is defined by a thin sheet of electrically conductive material, such as copper. In one embodiment, conductive member 16 is bent on itself to define a closed loop conductor for transferring electrical energy from a power source (not shown) to the inductor of sealing member 14a.

According to an aspect of the present invention, sealing device 14 comprises a stop member 17 carried by support frame 12 and arranged to cooperate with conductive member 16 for at least limiting a movement of conductive member 16.

In particular, the expression "stop member 17 carried by support frame 12" indicates that stop member 17 is fixed integrally to, or is integral in movement with, support frame 12, without necessarily being directly coupled thereto without interposition of other parts.

As a matter of fact, stop member 17 is preferably fixed to support frame 12 via other components, as it will be specified below.

According to an aspect of the invention, stop member 17 is configured to dampen vibrations of conductive member 16.

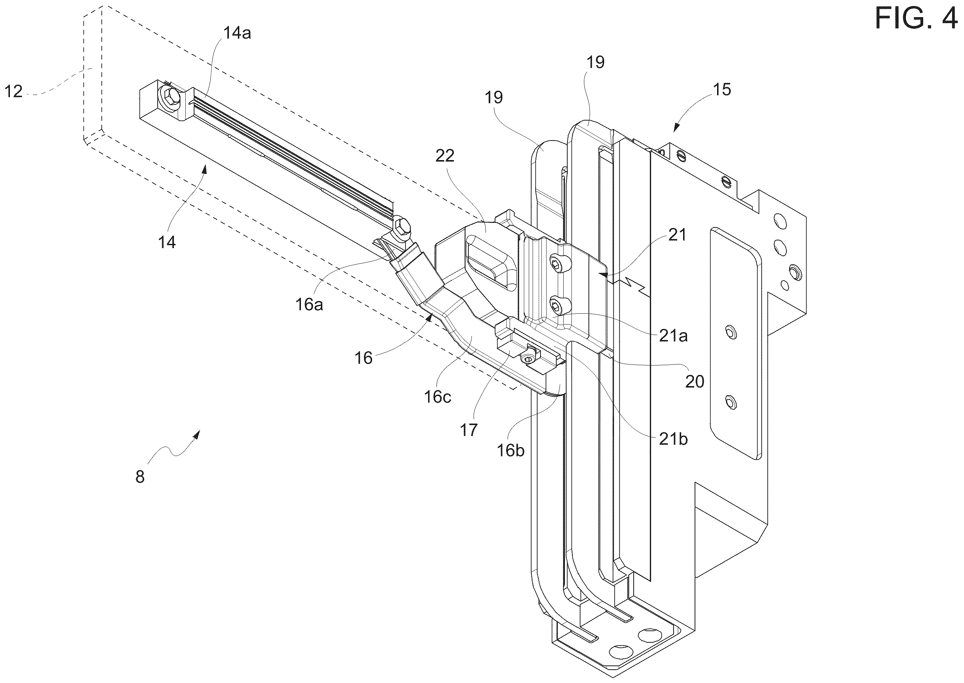

Conductive member 16 has a first end portion 16a connected to sealing member 14a, a second end portion 16b (only partially shown) connectable to a power source (not shown), and a main portion 16c arranged between first end portion 16a and second end portion 16b (Figure 4).

Preferably, stop member 17 cooperates with main portion 16c.

In this way, stop member 17 can better hinder the movement of conductive member 16.

More in particular, dampening of the vibrations of conductive member 16 is significantly improved.

In fact, conductive member 16, which according to the preferred embodiment shown is defined by a thin sheet of electrically conductive material, is fixed or constrained at its first end portion 16a and second end portion 16b. Accordingly, the portion which might be more prone to vibrations and/or oscillations during operation of forming unit 6 is indeed main portion 16c. Hence, since stop member 17 acts on (cooperates with) main portion 16c, such vibrations/oscillations are largely reduced, and in particular avoided.

Preferably, sealing device 14 includes an abutment element 18 carried by support frame 12.

The conductive member 16 rests on abutment element 18.

Advantageously, stop member 17 is arranged so that conductive member 16 is interposed between stop member 17 and abutment element 18.

In this way, vibrations/oscillations are limited from both sides of conductive member 16.

According to a preferred embodiment of the invention, stop member 17 is arranged in contact with conductive member 16 for blocking movement of conductive member 16.

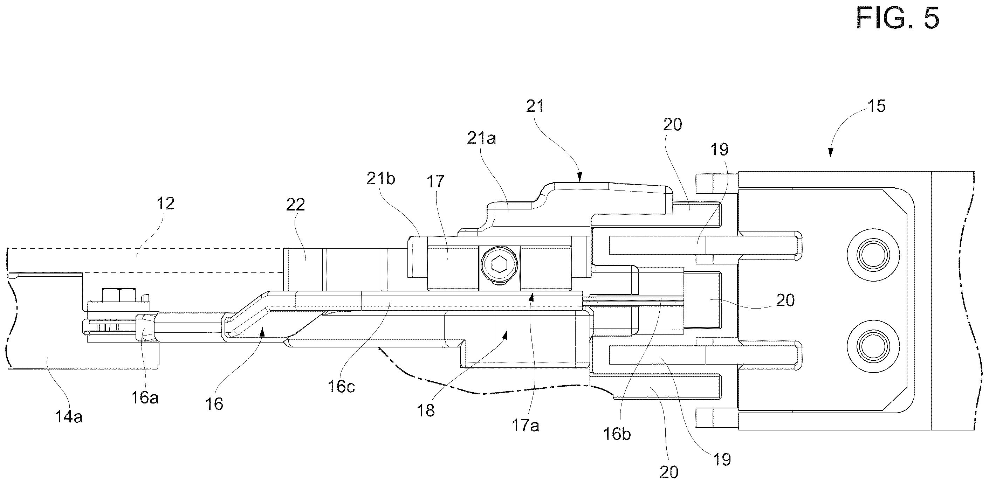

In detail, as better visible in Figure 5, stop member 17 presses conductive member 16 against abutment element 18, so that conductive member 16 is clamped between stop member 17 and abutment element 18.

In practice, conductive member 16 is sandwiched between stop member 17 and abutment element 18.

Thanks to this particular and preferred configuration, movement of conductive member 16 is substantially completely prevented.

In other words, vibrations/oscillations of conductive member 16 during operation are substantially avoided.

According to the preferred embodiment shown, power transfer system 15 comprises a first transmission device 19 configured to receive electrical energy from the aforementioned power source and a second transmission device 20 configured to receive electrical energy from first transmission device 19 and to feed electrical energy to conductive member 16 (and to sealing member 14a via conductive member 16).

Opportunely, conductive member 16 is connected (electrically connected) to second transmission device 20.

Opportunely, first transmission device 19 is fixed and carried by a frame of forming unit 6. Second transmission device 20 is carried by support frame 12.

Preferably, power transfer system 15 is a contactless power transfer system whereby first transmission device 19 transmits electrical energy to second transmission device 20 in a contactless manner.

In particular, power transfer system 15 is an electromagnetic-inductive power assembly, whereby:
- first transmission device 19 comprises transmission tracks which are configured to be electrically powered and to generate an electromagnetic field, and
- second transmission device 20 comprises magnetic elements which movably and contactlessly engage the transmission tracks, due to advancement of sealing device 14 along direction A.

In particular, the magnetic elements are configured to act as magnetic flux concentrators.

According to a manner known, an electric current is induced in the magnetic elements, which is then transmitted to conductive member 16 and powers sealing member 14a.

The operation of power transfer system 15 is described in detail in EP-A-1827802.

As visible in Figures 3 to 5, sealing device 14 comprises a first support member 21 mounted to support frame 12 and supporting second transmission device 20, i.e. the magnetic elements.

Preferably, stop member 17 is mounted to first support member 21.

Preferably, first support member 21 is made in one single piece. That is, first support member 21 has a continuous, uninterrupted structure with no bonded, welded, or fastened components. It is manufactured as a unitary element, ensuring structural integrity without the need for assembly or joining multiple parts.

The Applicant has observed that this single-piece configuration of first support member 21 improves the overall construction quality and robustness of the system, which is also beneficial to the steadiness of stop member 17. Moreover, a single piece first support member 21 allows to better maintain the position of second transmission device 20.

First support member 21 has a main portion 21a fixed to support frame 12 and configured to support second transmission device 20, and an appendix portion 21b carried by main portion 21a.

Preferably, stop member 17 is mounted to appendix portion 21b.

In other words, first support member 21 has a portion arranged and configured for supporting stop member 17. Hence, the possible counterforces and/or mechanical loads exerted by conductive member 16 are substantially absorbed by appendix portion 21b, without unduly stressing main portion 21a. This improves the overall behavior of first support member 21 under dynamic stresses, and avoids possible micro-displacement of main portion 21a, further ensuring a stable contactless transmission between first transmission device 19 and second transmission device 20.

As visible in Figures 3 to 5, sealing device 14 includes a second support member 22 configured to hold the second transmission device 20 and to cooperate in mating contact with a corresponding engaging member associated to the respective counter-sealing member 14b for driving advancement of sealing device 14 along a movement path.

Preferably, first support member 21 is mounted on second support member 22.

Therefore, stop member 17 is carried by support frame 12 indirectly and via second support member 22 and first support member 21.

Conveniently, abutment element 18 is carried, and in particular defined, by second support member 22.

In light of the above, conductive member 16 is firmly fixed between stop member 17 and abutment element 18, that is between first support member 21 and second support member 22.

This peculiar configuration provides a steady, stiff and robust blockage for conductive member 16, without unduly complicating the structure and architecture of sealing device 14 and without the need for additional components, apart from stop member 17.

Preferably, stop member 17 is configured to at least limit the movement of conductive member 16 along a direction transversal to direction A.

In particular, stop member 17 comprises a stop surface 17a which is arranged substantially parallel to direction A (and therefore orthogonally to said direction transversal to direction A), so as to hinder movement of the conductive member along said direction transversal to direction A.

In one embodiment, stop member 17 is made of plastic material.

Preferably, stop member 17 is made of rigid plastic material.

In this way, wear of stop member 17 is reduced.

In one embodiment, stop member 17 may be made of elastomeric material.

In this way, dampening of the vibrations of conductive member 16 is improved.

As visible in Figures 3 to 5, stop member 17 has a substantially parallelepiped shape.

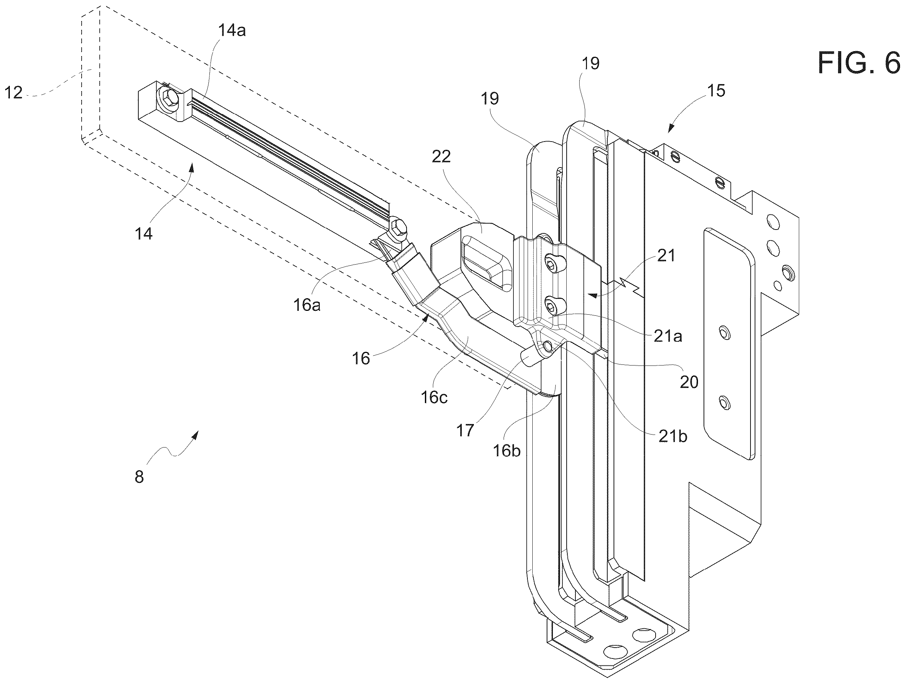

Figure 6 shows an alternative embodiment of sealing device 14 according to the invention.

In detail, Figure 6 illustrates an alternative embodiment of stop member 17.

According to this alternative embodiment, stop member 17 is defined by a pin carried by first support member 21.

In particular, pin 17 may be defined by a substantially cylindrical pin, as shown in Figure 6.

The function performed and the effects achieved by the parallelepiped-shape stop member 17 are equally reached by cylindrical pin 17.

The advantages of sealing device 14, and therefore of forming unit 6 and of packaging apparatus 1, according to the present invention will be clear from the foregoing description.

In particular, thanks to the presence of stop member 17, movement, and in particular vibrations and/or oscillations, of conductive member 16 during operation are significantly limited, and in particular avoided.

In this way, the lifespan of conductive member 16 is largely improved.

Clearly, changes may be made to sealing device 14 or to forming unit 6 or to packaging apparatus 1 as described herein without, however, departing from the scope of protection as defined in the accompanying claims.

## Claims

1. Sealing device (14) for sealing a tube of packaging material (3) containing a pourable product to obtain sealed packs (2a) filled with the pourable product, the sealing device (14) including a sealing member (14a) and a counter-sealing member (14b) configured to interact with the tube (3) for sealing a transversal section of the tube (3), thereby defining a transversal sealing band on the tube (3), the sealing device (14) comprising:
- a support frame (12) for supporting the sealing member (14a);
- a power transfer system (15) for powering the sealing member (14a) with electrical energy and comprising a conductive member (16) connected to the sealing member (14a) and configured to feed the electrical energy to the sealing member (14a);
- a stop member (17) carried by the support frame (12) and arranged to cooperate with the conductive member (16) for at least limiting a movement of the conductive member (16).

2. Sealing device as claimed in claim 1, wherein the stop member (17) is configured to dampen vibrations and/or oscillations of the conductive member (16).

3. Sealing device as claimed in claim 1 or 2, wherein the stop member (17) is arranged in contact with the conductive member (16) for blocking the movement of the conductive member (16).

4. Sealing device as claimed in any one of the foregoing claims, and further comprising an abutment element (18) carried by the support frame (12), the conductive member (16) resting on the abutment element (18);
wherein the stop member (17) is arranged so that the conductive member (16) is interposed between the stop member (17) and the abutment element (18).

5. Sealing device as claimed in claims 3 and 4, wherein the stop member (17) presses the conductive member (16) against the abutment element (18), so that the conductive member (16) is clamped between the stop member (17) and the abutment element (18).

6. Sealing device as claimed in any one of the foregoing claims, wherein the power transfer system (15) comprises a first transmission device (19) configured to receive electrical energy from a power source and a second transmission device (20) configured to receive electrical energy from the first transmission device (19) and to feed the electrical energy to the conductive member (16);
wherein the sealing device (14) comprises a first support member (21) mounted to the support frame (12) and supporting the second transmission device (20);
wherein the stop member (17) is mounted to the first support member (21).

7. Sealing device as claimed in claim 6, wherein the first support member (21) has a main portion (21a) fixed with respect to the support frame (12) and configured to support the second transmission device (20), and an appendix portion (21b) carried by the main portion (21a); wherein the stop member (17) is mounted to the appendix portion (21b).

8. Sealing device as claimed in claim 6 or 7, and further comprising a second support member (22) configured to hold the second transmission device (20) and to cooperate in mating contact with a corresponding engaging member associated to the counter-sealing member (14b) for driving advancement of the sealing device (14) along a movement path;
wherein the first support member (21) is mounted on the second support member (22).

9. Sealing device as claimed in any one of claims 6 to 8, wherein the first support member (21) is made in one single piece.

10. Sealing device as claimed in any one of claims 6 to 9, wherein the power transfer system (15) is a contactless transfer system whereby the first transmission device (19) transmits electrical energy to the second transmission device (20) in a contactless manner.

11. Sealing device as claimed in any one of the foregoing claims, wherein the sealing device (14) is movable along a longitudinal direction (A) parallel, in use, to the tube (3); and wherein the stop member (17) is configured to at least limit the movement of the conductive member (16) along a direction transversal to said longitudinal direction (A).

12. Sealing device as claimed in any one of the foregoing claims, wherein the conductive member (16) has a first end portion (16a) connected to the sealing member (14), a second end portion (16b) connectable to a power source, and a main portion (16c) arranged between the first end portion (16a) and the second end portion (16b);
wherein the stop member (17) cooperates with the main portion (16c).

13. Sealing device as claimed in any one of the foregoing claims, wherein the sealing member (14a) comprises an inductor configured to heat-seal the tube (3) by means of electromagnetic induction;
wherein the conductive member (16) is configured to supply electrical energy to the inductor.

14. Forming unit (6) for forming sealed packs (2a) from a tube (3) of packaging material, the forming unit (6) comprising a plurality of sealing devices (14) as claimed in any one of the foregoing claims.

15. Forming unit (6) as claimed in claim 14, and further comprising a plurality of forming devices (8), each forming device (8) being configured to cyclically engage the tube (3) for imparting a predetermined shape to a portion of the tube (3).

16. Packaging apparatus (1) for producing sealed packages (2) containing a pourable product from a tube (3) of packaging material, the packaging apparatus (1) comprising a forming unit (6) as claimed in claim 14 or 15 for interacting with successive portions of the tube (3) while the tube (3) is fed along a longitudinal direction (A).
